Europäisches Patentamt

(19) European Patent Office

Office européen des brevets

(11) Numéro de publication: **0 247 944
B1**

(12) **FASCICULE DE BREVET EUROPEEN**

(45) Date de publication du fascicule du brevet:
14.11.90

(51) Int. Cl.⁵: **H02G 1/08**

(21) Numéro de dépôt: 87401200.8

(22) Date de dépôt: 27.05.87

(54) **Dispositif pneumatique pour la mise en place de câbles dans un tube.**

(30) Priorité: **30.05.86 FR 8607820**

(43) Date de publication de la demande:
**02.12.87 Bulletin 87/49**

(45) Mention de la délivrance du brevet:
**14.11.90 Bulletin 90/46**

(84) Etats contractants désignés:
**AT BE CH DE ES GB GR IT LI LU NL SE**

(56) Documents cités:
**FR-A- 2 191 314**
**US-A- 3 179 375**

(73) Titulaire: **ETABLISSEMENTS MOREL - ATELIERS ELECTROMECANIQUES DE FAVIERES (Société Anonyme), Favières,
F-28170 Chateauneuf-en-Thymerais(FR)**

(72) Inventeur: **Morel, Jacques,
F-28170 Fontaine-Les-Ribouts(FR)**
Inventeur: **Morel, Didier, Favieres,
F-28170 Chateauneuf-En-Thymerais(FR)**

(74) Mandataire: **Bouju, André, Cabinet Bouju 38 avenue de la Grande Armée, F-75017 Paris(FR)**

## Description

La présente invention concerne un dispositif pneumatique pour la mise en place de câbles électriques ou téléphoniques dans un tube de protection qui est généralement enterré.

Les dispositifs connus de ce type comprennent une capsule communément appelée "furet" destinée à être introduite à l'une des extrémités du tube, cette capsule étant reliée à un filin servant à tirer le câble à l'intérieur du tube.

Ces dispositifs connus comprennent également un appareil communément appelé "lance-furet" muni de moyens de raccordement à une source d'air comprimé et d'un embout de sortie d'air comprimé, destiné à être raccordé de façon sensiblement étanche à l'une des extrémités du tube.

Lorsque l'opérateur commande l'arrivée d'air comprimé dans l'appareil, cet air pénètre à l'intérieur du tube et propulse la capsule vers l'autre extrémité du tube en tirant derrière elle le filin. Il suffit ensuite de tirer sur ce filin pour engager le câble à l'intérieur du tube.

Les dispositifs connus présentent l'inconvénient de présenter des risques de blessures graves pour l'opérateur chargé de la mise en oeuvre de ces dispositifs.

En effet, en cas d'obstruction du tube (invisible pour l'opérateur), la pression monte très rapidement à l'intérieur du tube, ce qui occasionne inévitablement une éjection très brutale de l'appareil (lance-furet), vers l'arrière, c'est-à-dire vers l'opérateur qui est normalement placé juste derrière cet appareil.

Cette éjection très brutale risque de blesser très sérieusement l'opérateur.

Le but de la présente invention est de créer un dispositif pneumatique pour la mise en place de câbles dans un tube qui garantisse à l'utilisateur une totale sécurité, qui soit de construction simple et de mise en oeuvre aisée.

Le dispositif visé par l'invention pour la mise en place d'un câble dans un tube, comprend une capsule destinée à être introduite à l'intérieur du tube et reliée à un filin servant à tirer le câble à l'intérieur du tube, un appareil muni de moyens de raccordement à une source d'air comprimé et d'un embout de sortie d'air comprimé destiné à être raccordé de façon sensiblement étanche à l'une des extrémités du tube.

Le document FR-A 2 191 314 décrit un dispositif du genre mentionné ci-dessus.

Suivant l'invention, cet appareil est caractérisé en ce qu'il comprend des moyens de distribution de l'air comprimé vers l'embout de sortie qui coopèrent avec des moyens pour réaliser l'échappement de l'air comprimé hors de l'appareil en cas de surpression en aval de l'embout de sortie de l'appareil.

Ainsi, en cas de surpression à l'intérieur du tube, l'air comprimé s'échappe à l'extérieur de l'appareil, de sorte que celui-ci ne risque pas d'être éjecté brutalement du tube et de blesser sérieusement l'opérateur.

Selon une version préférée de l'invention, le dispositif comprend une chambre dans laquelle est montée de façon coulissante, entre deux butées, un corps de distribution de l'air comprimé, cette chambre présentant une ouverture latérale d'admission, l'une des extrémités de cette chambre communiquant avec l'embout de raccordement avec le tube et l'autre extrémité de cette chambre communiquant avec une tubulure munie de moyens d'obturation du passage de l'air comprimé. Entre l'ouverture latérale d'admission dans la chambre et l'extrémité de celle-ci adjacente à l'embout de raccordement est prévue une ouverture latérale d'échappement. A l'intérieur de la chambre et autour du corps de distribution est disposé un anneau pouvant coulisser en même temps que le corps de distribution vers une position dans laquelle cet anneau et ce corps définissent entre eux un passage libre de l'air comprimé vers l'embout de raccordement et dans laquelle l'anneau obture l'ouverture latérale d'échappement. En cas de surpression en aval de la chambre, l'anneau peut coulisser vers une position située en amont de la précédente dans laquelle cet anneau libère l'ouverture latérale d'échappement.

Selon une version avantageuse de l'invention, la tubulure qui communique avec l'une des extrémités de la chambre est une tubulure flexible pouvent être pincée par l'utilisateur pour obturer le passage de l'air comprimé.

Grâce à ce tube flexible, l'opérateur peut se tenir à une certaine distance de l'appareil, de sorte qu'il ne risque pas d'être blessé en cas d'éjection brutale de celui-ci, si par hasard cer dernier présentait un défaut de fontionnement.

Lorsque cette tubulure flexible n'est pas pincée, l'air comprimé s'échappe uniquement vers l'extérieur de l'appareil.

Pour insuffler l'air comprimé à intérieur du tube, il suffit à l'utilisateur de pincer le tube flexible pour obturer celui-ci, ce qui met automatiquement l'appareil sous pression. Cette pression commande le coulissement vers l'avant du corps de distribution et de l'anneau, et de ce fait l'insufflation de l'air comprimé par le passage créé entre le corps de distribution et l'anneau.

D'autres particularités et avantages de l'invention apparaîtront encore dans la description ci-après.

Aux dessins annexés, donnés à titre d'exemples non limitatifs :

- la figure 1 est une vue en perspective et en coupe longitudinale montrant un chantier de pose de câbles, à l'intérieur de tubes enterrés, au moyen d'un dispositif conforme à l'invention,
- la figure 2 est une vue en plan de la capsule du dispositif selon l'invention,
- la figure 3 est une vue en coupe longitudinale partielle de l'appareil d'un dispositif selon l'invention,
- la figure 4 est une vue en coupe longitudinale d'un appareil conforme à l'invention dont l'embout de sortie est engagé dans un tube, l'appareil étant en position inactive,
- la figure 5 est une vue analogue à la figure 4, l'appareil étant en position de fonctionnement normal,

- la figure 6 est une vue analogue aux figures 4 et 5, l'appareil étant en position d'échappement du fait de l'obstruction du tube,
- la figure 7 est une vue en bout de l'appareil.

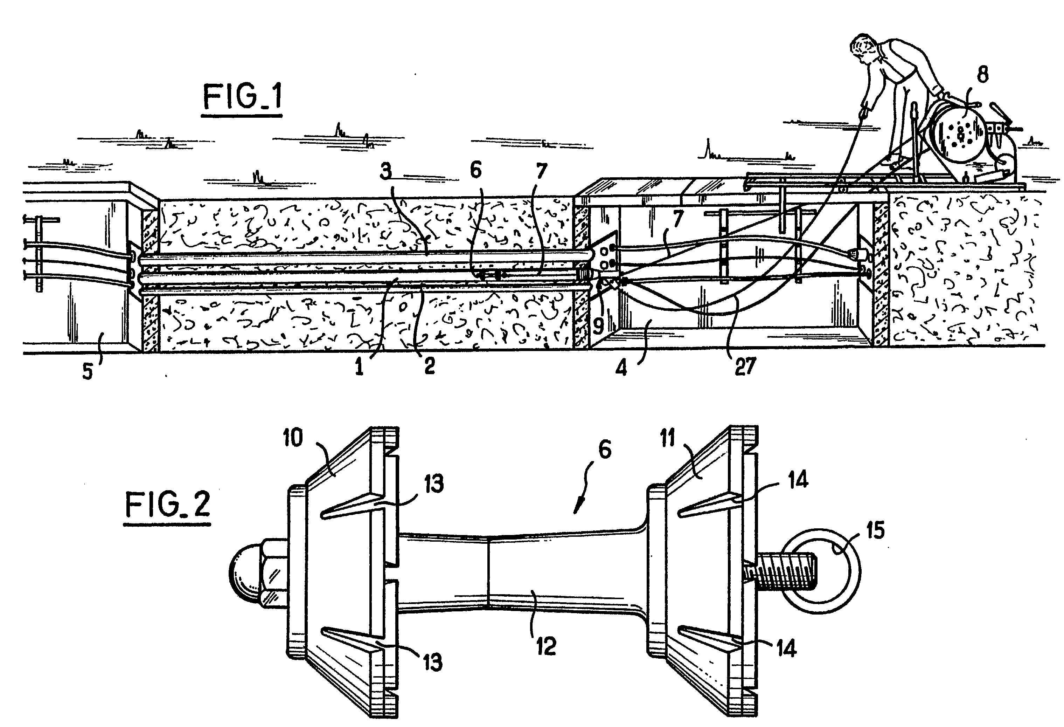

Sur la figure 1, on a représenté des tubes enterrés 1, 2, 3 destinés à recevoir des câbles, par exemple téléphoniques. Ces tubes 1, 2, 3 s'étendent entre des regards 4, 5, dans lesquels il est possible de pénétrer.

Pour mettre un câble en place dans un tube tel que le tube 1, on commence par introduire dans celui-ci une capsule 6 communément appelée "furet" qui est reliée à un filin 7, qui est lui-même relié à une dérouleuse 8, placée à l'extérieur du regard 4.

On place, comme indiqué sur la figure 1, à l'extrémité du tube 1 un appareil 9 relié par un tuyau souple 10 à un compresseur produisant de l'air comprimé à une pression de l'ordre de 6 bars.

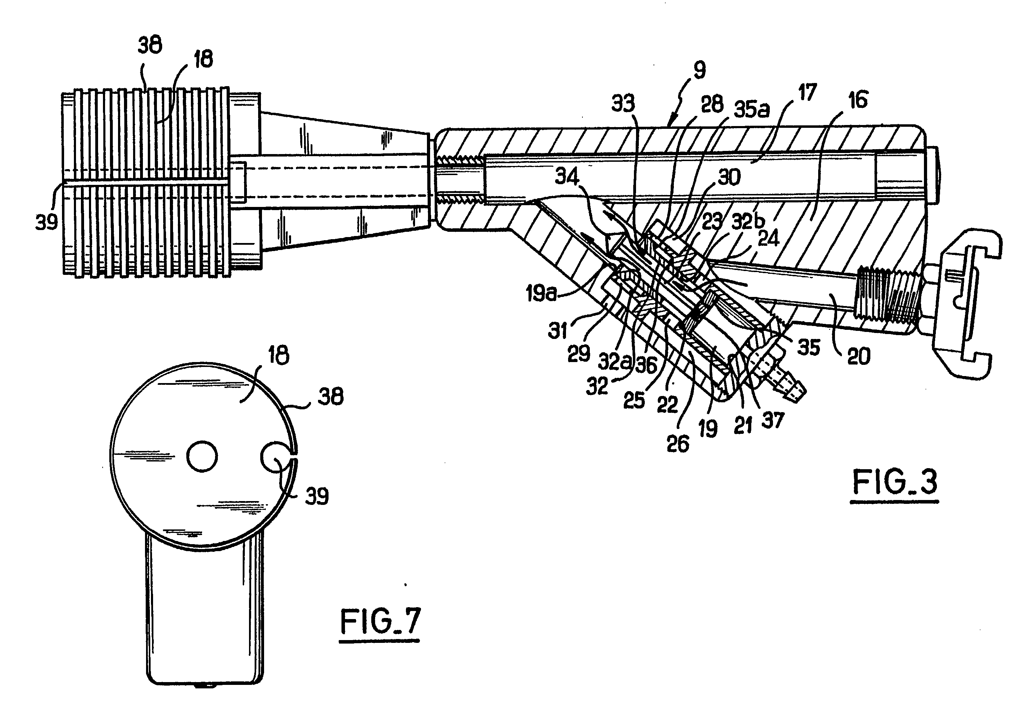

La capsule 6 et l'appareil 9 sont représentés plus en détail sur les figures 2 et 3. Le capsule 6 réalisée en matière plastique présente deux parties 10, 11, de forme tronconique dont l'évasement est dirigé vers l'arrière, ces deux parties étant reliées ensemble par un manchon axial 12. Ces parties tronconiques 10, 11 sont munies de fentes radiales 13, 14 qui confèrent à ces parties une certaine élasticité qui est favorable à l'obtention d'une bonne étanchéïté avec la surface intérieure du tube 1.

L'arrière de la capsule 6 comporte un anneau 15 auquel le filin 7 est destiné à être fixé.

L'appareil 9 représenté en détail sur la figure 3 comporte un corps 16 présentant un conduit longitudinal 17 qui débouche à l'extérieur à travers en embout 18 destiné à être raccordé de façon sensiblement étanche à l'extrémité du tube 1.

Dans le conduit 17 débouche une chambre 19 qui communique au moyen d'un conduit d'admission 20 et d'un tuyau souple avec le compresseur d'air comprimé.

Dans la chambre 19 est monté de façon coulissante, entre deux butées 21, 22, un corps 23 de distribution de l'air comprimé. Cette chambre 19 présente deux ouvertures latérales d'admission 24, 25 qui communiquent par l'intermédiaire d'une chambre annulaire 26 avec le conduit d'admission 20.

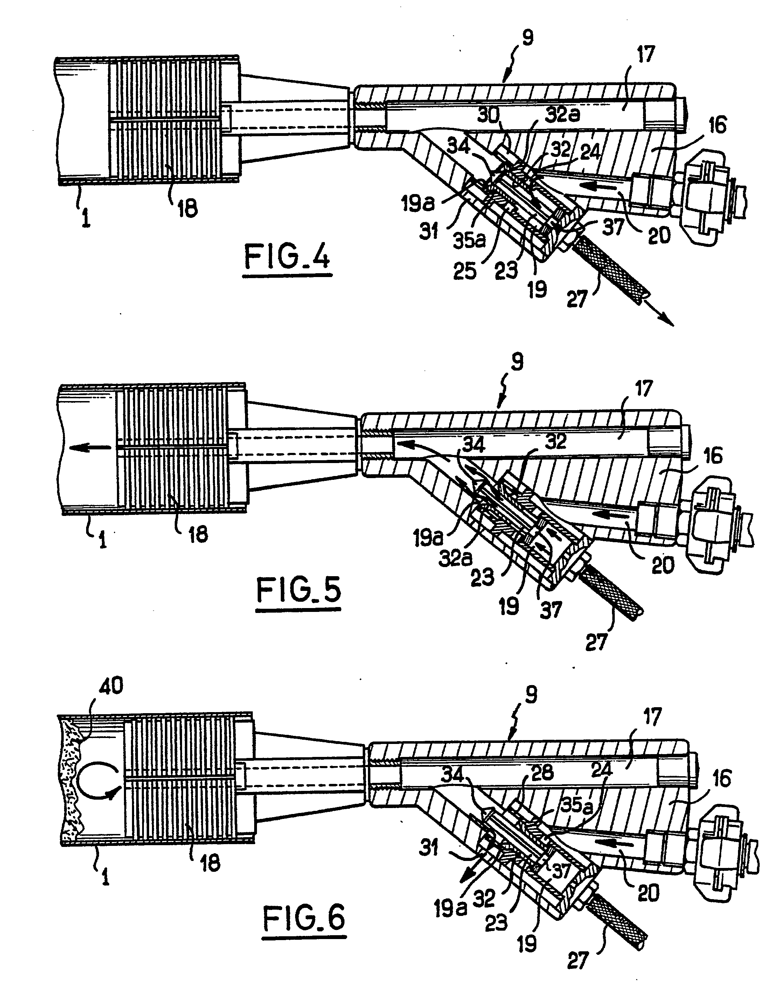

L'extrémité 21 de la chambre 19 opposée à l'embout de raccordement 18 communique avec une tubulure 27 (voir figures 4 à 6) munie de moyens d'obturation de passage de l'air comprimé qui seront détaillés plus loin.

Entre les ouvertures latérales 24, 25 d'admission dans la chambre 19 et l'extrémité 19a de celle-ci adjacente à l'embout de raccordement 18 sont prévues deux ouvertures latérales d'échappement, 28, 29 qui débouchent à l'extérieur par un compartiment annulaire 30 et un orifice 31.

A l'intérieur de la chambre 19 et autour du corps de distribution 23 est disposé un anneau 32 pouvant coulisser en même temps que le corps de distribution 23 vers une position dans laquelle cet anneau et ce corps 23 définissent entre eux un passage libre 23 de l'air comprimé vers l'embout de raccordement 18 et dans laquelle l'anneau 32 obture les ouvertures latérales 28, 29 d'échappement comme indiqué sur la figure 3.

En cas de surpression en aval de la chambre 19, l'anneau 32 peut coulisser vers une position située en amont de la précédente dans laquelle cet anneau libère les ouvertures latérales 28, 29 d'échappement, comme indiqué sur la figure 6.

La tubulure 27 qui communique avec l'extrémité 21 de la chambre 19 est une tubulure souple pouvant être pincée par l'utilisateur pour obturer le passage de l'air comprimé, comme indiqué sur les figures 5 et 6.

On voit d'autre part, notamment sur la figure 4, que le corps de distribution 23 a son extrémité aval 34 conformée pour réaliser l'étanchéïté avec la partie aval 32a de l'anneau 32, lorsque le corps 23 de distribution est butée contre l'extrémité 21 de la chambre 19 adjacente à la tubulure 27.

Par ailleurs, la face latérale du corps 23 de distribution est évidée pour définir entre ce corps 23 et l'anneau 32 le passage libre 33 de l'air comprimé.

La partie arrière du corps de distribution 23 comporte un piston 35 constituant une butée pouvant prendre appui contre un épaulement 22 de la face latérale de la chambre 19, situé légèrement en amont des ouvertures latérales 24, 25 d'admission de l'air comprimé dans cette chambre 19. Ce piston 35 comporte un orifice 37 qui communique avec les évidements latéraux du corps 23.

Par ailleurs, l'anneau 32 comporte à son extrémité aval, une partie élargie 35a, de forme tronconique, pouvant prendre appui contre un épaulement complémentaire 36 ménagé sur la face latérale de la chambre 19 en amont des ouvertures latérales 28, 29, d'échappement.

Lorsque cette partie élargie 35a de l'anneau 32 et en appui contre l'épaulement 36, l'extrémité 32b de l'anneau 32 opposée à la partie élargie 35a recouvre partiellement les ouvertures latérales 24, 25 d'admission.

L'embout 18 de sortie de l'appareil 9 comprend (voir figure 3 à 7) un manchon cylindrique 38, en matière élastique, de diamètre extérieur légèrement supérieur au diamètre intérieur du tube 1, et pouvant être enfoncé à force et de façon sensiblement étanche dans l'extrémité de ce tube 1.

On voit de plus sur la figure 7 que l'embout 18 comporte une fente latérale 39, s'étendant parallèlement à l'axe de cet embout pour guider le filin 7. Cette fente latérale 39 présente une section circulaire s'ouvrant à l'extérieur par un rétrécissement qui permet l'introduction du filin 7.

On va maintenant expliquer en référence aux figures 4 à 6, le fonctionnement du dispositif que l'on vient de décrire.

On supposera que la capsule 6 est engagée dans le tube 1 et que le filin 7 est attaché à cette capsule 6. L'opérateur enfonce l'embout 18 de l'appareil dans l'extrémité du tube 1 après avoir engagé le filin 7 dans la fente latérale 39.

En position inactive de l'appareil 9 (voir figure 4), le piston 35 du corps de distribution 23 est en butée contre l'extrémité 21 de la chambre 19.

Par ailleurs, l'anneau 32 prend appui par sa partie élargie 35a contre l'épaulement 36 de la chambre 19 et l'extrémité 34 du corps 23 obture l'extrémité aval 32a de l'anneau 32.

L'air comprimé provenant du compresseur pénètre dans la chambre 19 en passant par les ouvertures d'admission 24, 25 puis s'échappe de cette chambre par l'orifice 37 du piston 35 et par la tubulure flexible 27.

Lorsque l'opérateur désire insuffler de l'air comprimé dans le tube 1, il lui suffit de pincer la tubulure souple 27 comme indiqué sur la figure 5. Cette opération peut être effectuée à distance comme indiqué sur la figure 1.

La tubulure souple 27 étant obturée, l'air comprimé pousse vers l'avant le corps 23 et l'anneau 32 jusqu'à la position inidiquée sur la figure 5 dans laquelle le corps 23 est immobilisé par son piston 35 qui est en appui contre la butée 22 et l'anneau 32 est en appui contre la butée 19a ménagée à l'extrémité de la fente 19.

L'air comprimé s'échappe de la chambre 19 par le passage 33 créé entre l'anneau 32 et le corps 23, pénètre dans le conduit longitudinal 17, puis dans le tube 1. La capsule 6 est alors propulsée dans le tube 1 vers l'autre extrémité de celui-ci. Il suffit alors d'attacher le filin 7 accroché à la capsule 6, au câble, puis de tirer sur le filin 7 pour introduire le câble dans le tube 1.

S'il advient que l'intérieur du tube 1 est bouché comme indiqué par le repère 40 sur la figure 6, une surpression est créée à l'intérieur du tube 1 qui risque d'éjecter brutalement l'appareail 9 vers l'extérieur.

Ce risque est évité du fait que l'anneau 32 est, grâce à cette surpression, immédiatement poussé vers l'arrière, comme indiqué sur la figure 6. Lors de ce déplacement, l'anneau 32 libère les ouvertures d'échappement 28, 29, tandis que le corps 23 reste immobile. Grâce à ces ouvertures d'échappement 28, 29, la pression régnant à l'intérieur du tube 1, en aval de l'appareil 9, est maintenue à une valeur, par exemple inférieure ou égale à 1,5 bar et l'appareil 9 ne risque pas d'être éjecté.

Un opérateur situé derrière l'appareil 9 ne risque ainsi pas d'être blessé. Le dispositif selon l'invention garantit par conséquent une totale sécurité aux utilisateurs.

Bien entendu, les sections relatives du corps 23, de l'anneau 32, des ouvertures 24, 25, 28, 29 et 37 qui sont déterminantes pour permettre les déplacements respectifs de ce corps et de cet anneau sont calculées en fonction des pressions admissibles.

Bien entendu, l'obturation de la tubulure flexible 27 pourrait être assurée par d'autres moyuens de pincement de ce tube, tels qu'une vane commandée par des moyens mécaniques, électriques ou pneumatiques.

## Revendications

1. Dispositif pneumatique pour la mise en place de câbles dans un tube (1), comprenant une capsule (6) destinée à être introduite à l'intérieur du tube et reliée à un filin (7) servant à tirer le câble à l'intérieur du tube, un appareil (9) muni de moyens (20) de raccordement à une source d'air comprimé et d'un embout de sortie (18) d'air comprimé destiné à être raccordé de façon sensiblement étanche à l'une des extrémités du tube (1), caractérisé en ce que cet appareil (9) comprend des moyens (19, 23) de distribution de l'air comprimé vers l'embout de sortie (18) qui coopèrent avec des moyens (32, 28, 29) pour réaliser l'échappement de l'air comprimé hors de l'appareil en cas de surpression en aval de l'embout de sortie (18) de l'appareil.

2. Dispositif conforme à la revendication 1, caractérisé en ce que l'appareil (9) comprend une chambre (19) dans laquelle est monté de façon coulissante, entre deux butées, un corps (23) de distribution de l'air comprimé, cette chambre présentant une ouverture latérale (24) d'admission, l'une (19a) des extrémités de cette chambre communiquant avec l'embout de raccordement (18) avec le tube (1) et l'autre extrémité (21) de cette chambre communiquant avec une tubulure (27) munie de moyens d'obturation du passage de l'air comprimé, en ce qu'entre l'ouverture latérale (24) d'admission dans la chambre (19) et l'extrémité de celle-ci adjacente à l'embout de raccordement est prévue une ouverture latérale (28) d'échappement, en ce qu'à l'intérieur de la chambre (19) et autour du corps de distribution (23) est disposé un anneau (32) pouvant coulisser en même temps que le corps de distribution (23) vers une position dans laquelle cet anneau et ce corps définissent entre eux un passage libre (33) de l'air comprimé vers l'embout de raccordement et dans laquelle l'anneau (32) obture l'ouverture latérale (28) d'échappement, et en ce qu'en cas de surpression en aval de la chambre (19), l'anneau (32) peut coulisser vers une position située en amont de la précédente dans laquelle cet anneau libère l'ouverture latérale (28) d'échappement.

3. Dispositif conforme à la revendication 2, caractérisé en ce que la tubulure (27) qui communique avec ladite autre extrémité (21) de la chambre (19) est une tubulure flexible pouvent être pincée par l'utilisateur pour obturer le passage de l'air comprimé.

4. Dispositif conforme à la revendication 2, caractérisé en ce que le corps de distribution (22) a son extrémité aval (34) conformée pour réaliser l'étanchéïté avec la partie aval (32a) de l'anneau (32), lorsque le corps (23) est en butée contre l'extrémité (21) de la chambre adjacente à la tubulure (27).

5. Dispositif conforme à la revendication 4, caractérisé en ce que la face latérale du corps de distribution (23) comprend au moins un évidement pour définir entre le corps et l'anneau (32) un passage libre de l'air comprimé.

6. Dispositif conforme à la revendication 5, caractérisé en ce que la partie arrière du corps de distribution (23) comporte une butée (35) pouvant prendre appui contre un épaulement (22) de la face latérale de la chambre (19) situé légèrement en amont de l'ouverture latérale d'admission (24) de l'air comprimé dans la chambre.

7. Dispositif conforme à l'une des revendications 2 à 6, caractérisé en ce que l'anneau (32) comporte à son extrémité aval une partie élargie (35a) pouvant prendre appui contre un épaulement (36) ménagé sur la face latérale de la chambre (19) en amont de l'ouverture latérale d'échappement (28).

8. Dispositif conforme à la revendication 7, caractérisé en ce que lorsque la partie élargie (35a) de l'anneau (32) prend appui contre l'épaulement (36), l'extrémité (32b) de l'anneau opposée à la partie élargie recouvre partiellement l'ouverture latérale d'admission (24).

9. Dispositif conforme à l'une des revendications 5 à 8, caractérisé en ce que la partie arrière (35) du corps de distribution (23) comporte un orifice (37) qui communique avec l'évidement latéral du corps (23).

10. Dispositif conforme à l'une des revendications 1 à 9, caractérisé en ce que l'embout de sortie (18) de l'appareil comprend un manchon cylindrique (38) en matière élastique de diamètre extérieur légèrement supérieur au diamètre intérieur du tube (1) et pouvant être enfoncé à force dans l'extrémité de ce tube.

11. Dispositif conforme à l'une des revendications 1 à 10, caractérisé en ce que l'embout (18) comporte une fente latérale (39) s'étendant parallèlement à l'axe de cet embout pour guider le filin (7).

**Claims**

1. A pneumatic device for fitting cables in a tube (1), comprising a capsule (6) adapted to be introduced inside the tube and connected to a line (7) used to pull the cable inside the tube, a unit (9) provided with means (20) for connection to a compressed air source and a compressed air outlet connector (18) being adapted to be connected in substantially sealing-tight relationship to one of the ends of the tube (1), characterised in that said unit (9) comprises means (19, 23) for distributing compressed air to the outlet connector (18), said means co-operating with means (32, 28, 29) to discharge the compressed air from the unit in the event of an excess pressure downstream of the unit outlet connector (18).

2. A device according to claim 1, characterised in that the unit (9) comprises a chamber (19) in which a compressed air distributor (23) is mounted slidably between two abutments, said chamber having a lateral intake port (24), one (19a) of the ends of said chamber communicating with the outlet connector (18) and the other end (21) of said chamber communicating with a tube (27) provided with means for closing the compressed air passage, a lateral exhaust port (28) is provided between the lateral intake port (24) to the chamber (19) and the end thereof adjacent the connector, a ring (32) is disposed inside the chamber (19) and around the distributor (23) and is slidable together with the distributor (23) into a position in which said ring and said distributor define between them a free passage (33) for the compressed air to the connector and in which the ring (32) closes the lateral exhaust port (28), and that in the event of an excess pressure downstream of the chamber (19) the ring (32) can slide into a position situated upstream of the previous position in which said ring frees the lateral exhaust port (28).

3. A device according to claim 2, characterised in that the tube (27) communicating with the said other end (21) of the chamber (19) is a flexible tube which can be clamped by the user to block the compressed air passage.

4. A device according to claim 2, characterised in that the downstream end (34) of the distributor (23) is shaped to provide a sealing-tight relationship with the downstream part (32a) of the ring (32) when the distributor (23) abuts the end (21) of the chamber adjacent the tube (27).

5. A device according to claim 4, characterised in that the side surface of the distributor (23) comprises at least one recess to define a free compressed air passage between the body and the ring (32).

6. A device according to claim 5, characterised in that the rear part of the distributor (23) comprises an abutment (35) adapted to bear against a shoulder (22) on the side surface of the chamber (19) situated slightly upstream of the lateral port (24) for the intake of compressed air into the chamber.

7. A device according to any one of claims 2 to 6, characterised in that the downstream end of the ring (32) has a widened part (35a) adapted to abut a shoulder (36) formed on the side surface of the chamber (19) upstream of the lateral exhaust port (28).

8. A device according to claim 7, characterised in that when the widened part (35a) of the ring (32) bears against the shoulder (36) that end (32b) of the ring which is remote from the widened part partially covers the lateral intake port (24).

9. A device according to any one of claims 5 to 8, characterised in that the rear part (35) of the distributor (23) is formed with an orifice (37) which communicates with the lateral recess of the distributor (23).

10. A device according to any one of claims 1 to 9, characterised in that the outlet connector (18) of the unit comprises a cylindrical sleeve (38) of elastic material, the outside diameter of which is slightly larger than the inside diameter of the tube (1), and which is adapted to be force-fitted into the end of said tube.

11. A device according to any of claims 1 to 10, characterised in that the outlet connector (18) has a lateral slot (39) extending parallel to the axis of said outlet connector to guide the line (7).

**Patentansprüche**

1. Pneumatische Vorrichtung zum Einbringen von Kabeln in ein Rohr (1), mit einer Kapsel (6), die dazu bestimmt ist, ins Innere des Rohres eingeführt und mit einem Seil (7) verbunden zu werden, das dazu dient, das Kabel ins Innere des Rohres zu ziehen, und einer Einrichtung (9), die mit Mitteln (20) für den Anschluß an eine Druckluftquelle und mit einem Druckluftaustritts-Verbinder (18) versehen ist, der dazu bestimmt ist, im wesentlichen dicht an das eine der Enden des Rohres (1) angeschlossen zu werden, dadurch gekennzeichnet, daß diese Einrichtung (9) Mittel (19, 23) zur Zuführung von Druckluft zum Austrittsverbinder (18) umfaßt, welche mit Mitteln (32, 28, 29) zusammenwirken, um im Falle eines Überdrucks stromab des Austrittsverbinders (18) der Einrichtung für ein Entweichen der Druckluft aus der Einrichtung zu sorgen.

2. Vorrichtung nach Anspruch 1, dadurch gekennzeichnet, daß die Einrichtung (9) eine Kammer (19) enthält, in der ein Druckluft-Zuführungskörper (23) zwischen zwei Anschlägen verschiebbar angeordnet ist und die eine seitliche Einlaßöffnung (24) aufweist, wobei das eine (19a) der Enden dieser Kammer mit dem Verbinder (18) für den Anschluß an das Rohr (1) in Verbindung steht und das andere Ende (21) dieser Kammer mit einer mit Mitteln zum Absperren des Druckluftdurchganges versehenen Rohrleitung (27) in Verbindung steht, daß zwischen der seitlichen Einlaßöffnung (24) in der Kammer (19) und dem dem Anschlußverbinder benachbarten Ende der Kammer eine seitliche Auslaßöffnung (28) vorgesehen ist, daß im Inneren der Kammer (19) und um den Zuführungskörper (23) herum ein Ring (32) angeordnet ist, der gleichzeitig mit dem Zuführungskörper (23) in eine Stellung verschiebbar ist, in der dieser Ring und dieser Körper zwischen sich einen freien Druckluftdurchlaß (33) in Richtung zum Anschlußverbinder bilden und in der der Ring (32) die seitliche Auslaßöffnung (28) verschließt, und daß im Falle eines Überdrucks stromab der Kammer (19) sich der Ring (32) in eine stromauf der vorgenannten Stellung gelegene Stellung verschieben kann, in der dieser Ring die seitliche Auslaßöffnung (28) freigibt.

3. Vorrichtung nach Anspruch 2, dadurch gekennzeichnet, daß die mit dem genannten anderen Ende (21) der Kammer (19) in Verbindung stehende Rohrleitung (27) eine flexible Rohrleitung ist, die vom Benutzer zusammengequetscht werden kann, um den Durchgang der Druckluft zu sperren.

4. Vorrichtung nach Anspruch 2, dadurch gekennzeichnet, daß das stromab gelegene Ende (34) des Zuführungskörpers (23) so ausgebildet ist, daß eine Abdichtung mit dem stromab gelegenen Teil (32a) des Ringes (32) hergestellt wird, wenn der Körper (23) an dem der Rohrleitung (27) benachbarten Ende (21) der Kammer anliegt.

5. Vorrichtung nach Anspruch 4, dadurch gekennzeichnet, daß die Seitenfläche des Zuführungskörpers (23) mindestens eine Aussparung aufweist, um zwischen dem Körper und dem Ring (32) einen freien Druckluftdurchlaß zu bilden.

6. Vorrichtung nach Anspruch 5, dadurch gekennzeichnet, daß der hintere Teil des Zuführungskörpers (23) einen Anschlag (35) besitzt, der sich an einer Schulter (22) der Seitenfläche der Kammer (19) abstützen kann, welche Schulter geringfügig stromauf der seitlichen Öffnung (24) für den Einlaß von Druckluft in die Kammer gelegen ist.

7. Vorrichtung nach einem der Ansprüche 2 bis 6, dadurch gekennzeichnet, daß der Ring (32) an seinem stromab gelegenen Ende einen verbreiterten Abschnitt (35a) aufweist, der sich an einer an der Seitenfläche der Kammer (19) stromauf der seitlichen Auslaßöffnung (28) ausgebildeten Schulter (36) abstützen kann.

8. Vorrichtung nach Anspruch 7, dadurch gekennzeichnet, daß bei sich an der Schulter (36) abstützendem verbreiterten Abschnitt (35a) des Ringes (32) das dem verbreiterten Abschnitt entgegengesetzte Ende (32b) des Ringes die seitliche Einlaßöffnung (24) teilweise abdeckt.

9. Vorrichtung nach einem der Ansprüche 5 bis 8, dadurch gekennzeichnet, daß der hintere Teil (35) des Zuführungskörpers (23) eine Öffnung (37) aufweist, die mit der seitlichen Aussparung des Körpers (23) in Verbindung steht.

10. Vorrichtung nach einem der Ansprüche 1 bis 9, dadurch gekennzeichnet, daß der Austrittsverbinder (18) der Einrichtung einen zylindrischen Stutzen (38) aus elastischem Material aufweist, dessen Außendurchmesser geringfügig größer ist als der Innendurchmesser des Rohres (1) und der unter Kraftanwendung in das Ende dieses Rohres einpreßbar ist.

11. Vorrichtung nach einem der Ansprüche 1 bis 10, dadurch gekennzeichnet, daß der Verbinder (18) einen seitlichen Schlitz (39) aufweist, der sich parallel zur Achse dieses Verbinders erstreckt, um das Seil (7) zu führen.

FIG_1

FIG_2

EP 0 247 944 B1

FIG_3

FIG_7

FIG.4

FIG.5

FIG.6